# EUROPEAN PATENT APPLICATION

(11) **EP 3 385 569 A1**
(43) Date of publication of application: **10.10.2018**
(21) Application number: 18163207.6
(22) Date of filing: 21.03.2018
(51) Int. Cl.: F16G 13/04, F16G 13/08, B21L 99/00

(54) **LASER-MARKED CHAIN**

(30) Priority: 03.04.2017 US 201762480813 P
(71) Applicant: Borgwarner Inc., Auburn Hills, Michigan 48326 (US)
(72) Inventor: SACCHETTI, Marco, 20090 Segrate (IT); GIANOLI, Matteo, 20833 Giussano (IT); LOSACCO, Nicola, 20862 Arcore (IT)
(74) Representative: Peterreins Schley

(57) **Abstract**

A method for forming a laser-marked chain assembly. The method includes: coupling a plurality of chain links to one another for form a length of chain having a first and a second end; marking an outer plate of at least one of the plurality of chain links with a laser; and coupling the first and second ends to one another to form the laser-marked chain assembly.

## Description

### CROSS-REFERENCE TO RELATED APPLICATIONS

This application claims the benefit of U.S. Provisional Application No. 62/480813, filed on April 3, 2017, the disclosure of which is incorporated by reference as if fully set forth in detail herein.

### FIELD

The present disclosure relates to a laser-marked chain for use in a chain drive system.

### BACKGROUND

Chain drives are widely used in systems to convey rotary motion between components whose rotational axes are non-coincident. Once common use for a chain drive involves the transmission of rotary power from the crankshaft of an internal combustion engine to drive one or more camshafts. These chain drives have a chain assembly that can be configured as roller chain or a leaf chain. With such chain drives, it is common for one or more of the chain links to be provided with markings to identify a) the part number of the chain assembly, b) a country of origin for the chain assembly, c) the manufacturer of the chain assembly, d) the customer or original equipment manufacturer (OEM) of the chain assembly, and/or e) one or more timing marks on the chain assembly.

Some of the above-described information has been incorporated into a chain assembly by stamping a mark onto the outer plate of at least one of the chain links. Marking in this manner requires that the outer plate be marked prior to the assembly of the chain assembly and as such, the manufacture of the chain assembly is complicated by the existence of various outer plates that are each employed in a specific chain assembly but which may be inadvertently interchanged with one another. Moreover, the use of outer plates that are vary from one another only in the marking or coloration increases the cost of the chain assembly due to the need to procure and store these outer plates and due to the need to change-over from one outer plate to another when changing over from the manufacture of one chain assembly to another chain assembly. Additionally, the stamping of the outer plate can adversely affect the flatness of the inboard side of the outer plate and create high spots corresponding to the shape of the marking (on the out-board side of) the outer plate. In extreme situations, the high spots can lead to increased wear on the outer plate.

Other means for marking a chain assembly include the use of color-coded outer plates in which the color-coding of the outer plate is done prior to or after assembly of the chain assembly. While such other marking means can eliminate the issues with the flatness of the inboard side of the outer plate, they can be associated with various other issues, including chemical compatibility, hydrogen embrittlement, and increased cost due to the need for additional process steps such as heat-curing.

In view of the above remarks, there remains a need in the art for a chain assembly having a link with an outer plate that is permanently marked in a cost effective manner.

### SUMMARY

This section provides a general summary of the disclosure, and is not a comprehensive disclosure of its full scope or all of its features.

In one form, the present disclosure provides a method for forming a laser-marked chain assembly. The method includes: coupling a plurality of chain links to one another for form a length of chain having a first and a second end; marking an outer plate of at least one of the plurality of chain links with a laser; and coupling the first and second ends to one another to form the laser-marked chain assembly.

In one preferred form, marking the outer plate of at least one of the plurality of chain links with the laser is performed prior to coupling the first and second ends to one another.

In one preferred form, marking the outer plate of at least one of the plurality of chain links comprises forming a timing mark.

In one preferred form, marking the outer plate of at least one of the plurality of chain links comprises forming a code that includes a part number of the laser-marked chain assembly. The code can optionally comprise a bar code or a data matrix. In situations where the code comprises a data matrix, the data matrix can optionally include a revision level of the laser-marked chain assembly, a date of manufacture of the laser-marked chain assembly, an identify of a machine on which the laser-marked chain assembly was assembled, and/or an identity of a facility where the laser-marked chain assembly was assembled.

In another preferred form, the present disclosure provides a laser-marked chain assembly that comprises a plurality of links, each of the links having a plurality of plates, the plates of adjacent links being coupled to one another via a pin, wherein an outer plate of at least one of the links is laser etched with a mark. The mark could comprise a timing mark, an alphanumeric character, and/or a code, such as a bar code or a data matrix.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a perspective view depicting various chain assemblies constructed in accordance with the teachings of the present disclosure;
Figure 2 is a perspective view of a portion of one of the chain assemblies illustrated in Figure 1;
Figures 3 and 4 are perspective views of portions of the chain assembly illustrated in Figure 2, illustrating outer plates of the chain assembly that have been permanently marked by a laser;
Figures 5 and 6 are elevation views of outer plates for various chain assemblies that have been permanently marked by a laser with a data matrix;
Figure 7 is a perspective view of an exemplary machine for assembling the chain assembly of Figure 2; and
Figure 8 is a perspective view in partial section of the machine of Figure 7.Corresponding reference numerals indicate corresponding parts throughout the several views of the drawings.

### DETAILED DESCRIPTION

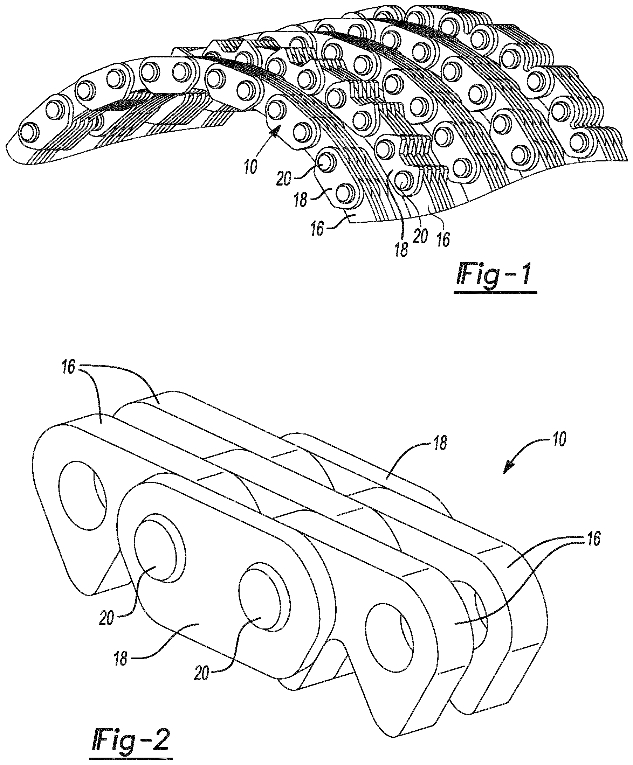

With reference to Figure 1, several chain assemblies constructed in accordance with the teachings of the present disclosure are illustrated, including chain assembly 10. With reference to Figure 2, chain assembly 10 is a type of leaf chain and includes a plurality of link plates 16, a plurality of outer plates 18 and a plurality of pins 20. It will be appreciated, however, that the teachings of the present disclosure have application to other types of chain assemblies, including those chain assemblies that are configured as a type of roller chain.

In the example provided, the link plates 16 are segregated into sets, with the ends of each adjacent set of link plates 16 being interlaced. The outer plates 18 can be disposed on laterally outer sides of the sets of link plates 16. Each of the pins 20 can be received through corresponding pin apertures formed in the link plates 16 and the outer plates 18 to pivotally couple the ends of each of the link plates 16 to a corresponding end of an adjacent one of the outer plates 18.

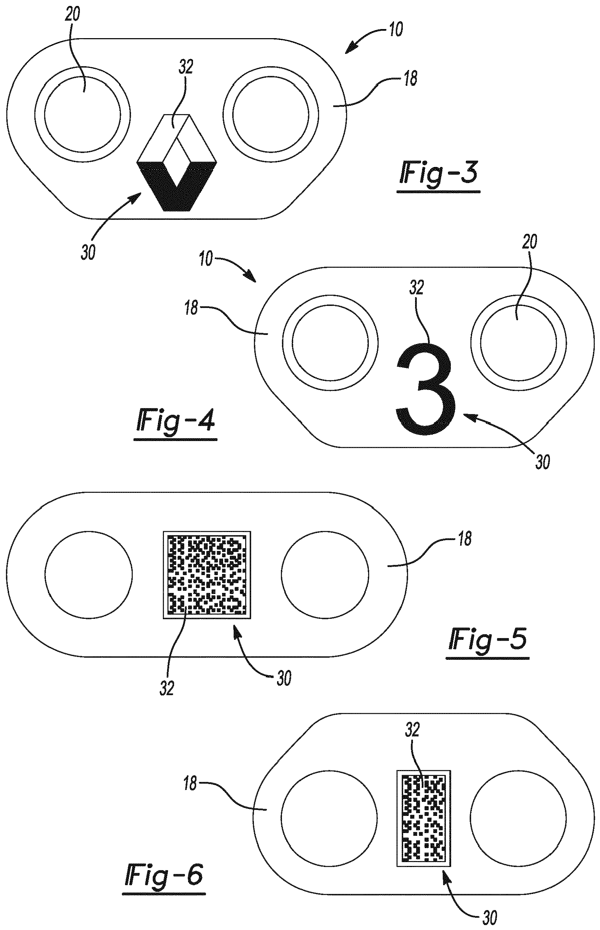

In Figures 3 and 4, portions of the chain assembly 10 are illustrated in more detail. In Figure 3, one of the outer plates 18 is permanently marked via a laser with a timing mark 30, while another one of the outer plates 18 is illustrated in Figure 4 to be permanently marked via a laser with a character 32, which is the number "3" in the example provided. The character 32 can be a trademark of the manufacturer of the chain assembly, or can be part of a name or number that is disposed over several adjacent outer plates 18. Alternatively, the character 32 can be a code, which can be representative of a manufacturing date, a customer or a manufacturer of the chain assembly 10. With reference to Figures 5 and 6, the code of the character 32 could take the form a data matrix or bar code (not shown). A data matrix permits a very large amount of data to be coded directly onto the outer plate 18. The information in the data matrix could in turn be encoded so that even more data could be associated with the chain assembly 10 (Fig. 2). Moreover, several of the outer plates 18 could be marked, each with a unique data matrix, so that still more data can be associated with the chain assembly 10 (Fig. 2). Examples of such data include a multi-character code that is associated with a customer of the chain assembly 10 (Fig. 2), a manufacturing code, which could identify the part number and revision level of the chain assembly 10 (Fig. 2), and a production code that could include the identity of the facility that manufactured the chain assembly 10 (Fig. 2), the date of manufacture of the chain assembly 10 (Fig. 2), the identity of the machine on which the chain 10 (Fig. 2) was assembled, and the time or shift at which the chain assembly 10 (Fig. 2) was assembled.

Returning to Figure 2, the marking of the outer plate(s) 18 may be performed as a separate operation during the assembly of the chain assembly 10, or could be performed by a laser that is tasked with performing another operation, such as welding the pins 20 to the outer plates 18. Marking of the outer plate(s) 18 during assembly of the chain assembly 10 is highly desirable because it eliminates complexity (e.g., unique part numbers, the need to assemble pre-marked outer plates into the assembly at one or more desired locations) and can reduce the frequency of inspection of the finished chain assembly 10.

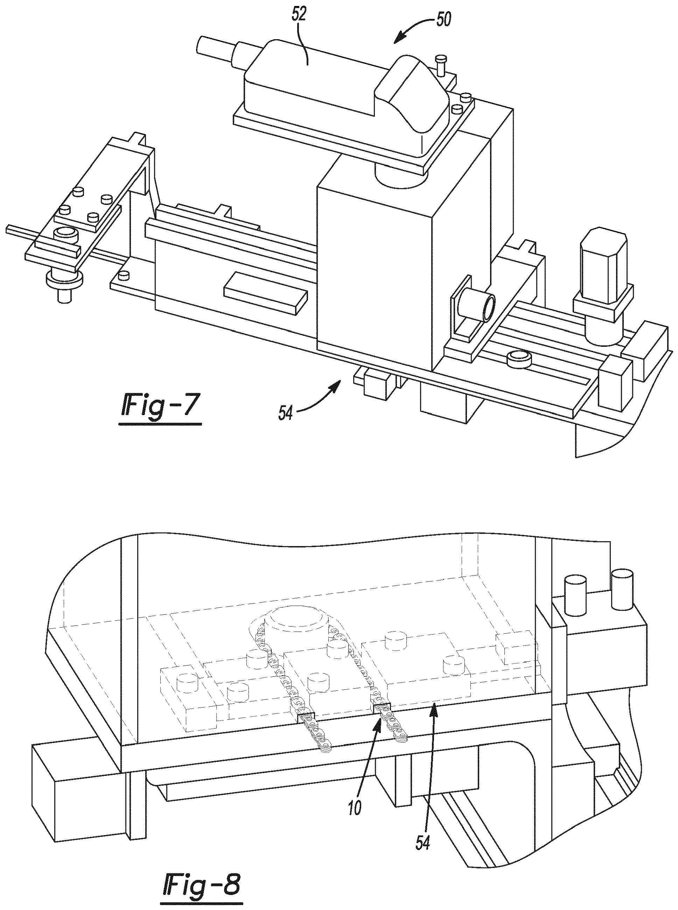

With reference to Figures 7 and 8, a portion of an exemplary machine 50 for fabricating the chain assembly 10 is shown. The machine 50 includes a laser 52 and a holder 54 for securing at least a portion of the chain assembly 10 when the laser 52 is operated to form a desired mark on an outer plate 18 of the chain assembly 10. The laser can be any appropriate laser, such as a model Arex 20W fiber laser manufactured by Datalogic S.p.A.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A method for forming a laser-marked chain assembly, the method comprising:
coupling a plurality of chain links to one another for form a length of chain having a first and a second end;
marking an outer plate of at least one of the plurality of chain links with a laser; and
coupling the first and second ends to one another to form the laser-marked chain assembly.

2. The method of Claim 1, wherein marking the outer plate of at least one of the plurality of chain links with the laser is performed prior to coupling the first and second ends to one another.

3. The method of Claim 1, wherein marking the outer plate of at least one of the plurality of chain links comprises forming a timing mark.

4. The method of Claim 1, wherein marking the outer plate of at least one of the plurality of chain links comprises forming a code that includes a part number of the laser-marked chain assembly.

5. The method of Claim 4, wherein the code comprises a bar code.

6. The method of Claim 4, wherein the code comprises a data matrix.

7. The method of Claim 6, wherein the data matrix includes a revision level of the laser-marked chain assembly.

8. The method of Claim 6, wherein the data matrix includes a date of manufacture of the laser-marked chain assembly.

9. The method of Claim 6, wherein the data matrix includes an identify of a machine on which the laser-marked chain assembly was assembled.

10. The method of Claim 6, wherein the data matrix includes an identity of a facility where the laser-marked chain assembly was assembled.

11. A laser-marked chain assembly according to the method of Claim 1.
